Europäisches Patentamt

(19) European Patent Office

Office européen des brevets

(11) Numéro de publication: **0 170 572**
**A1**

## (12) DEMANDE DE BREVET EUROPEEN

(21) Numéro de dépôt: **85401343.0**

(22) Date de dépôt: **03.07.85**

(51) Int. Cl.⁴: **F 16 C 32/06**

(30) Priorité: **03.07.84 FR 8410506**

(43) Date de publication de la demande:
**05.02.86 Bulletin 86/6**

(84) Etats contractants désignés:
**DE FR GB IT**

(71) Demandeur: **Affouard, Robert**
**3 rue Robert Lanen**
**F-92190 Meudon(FR)**

(72) Inventeur: **Affouard, Robert**
**3 rue Robert Lanen**
**F-92190 Meudon(FR)**

(74) Mandataire: **Lemoine, Michel et al,**
**Cabinet Michel Lemoine et Bernasconi 13 Boulevard des**
**Batignolles**
**F-75008 Paris(FR)**

(54) Perfectionnements aux systèmes de sustentation à fluide sous pression.

(57) A l'opposé d'une poche principale (4A) par rapport à l'axe (X-X) de la résultante des efforts developpés lors du mouvement relatif d'une bielle (13) et d'un excentrique (11), le patin (21) de las bielle (13) comporte une poche auxiliaire (9A) de plus petite dimension. Une soucre d'huile sous pression alimente une poche centrale (14) par l'intermédiaire d'une restriction (18) ainsi que la poche auxiliaire (9A). L'huile provenant de la poche auxiliaire (9A) franchit le jeu (h) et est transmise à la poche principale (4A) par une canalisation (10a).

Fig:3

EP 0 170 572 A1

PERFECTIONNEMENTS AUX SYSTEMES DE SUSTENTATION
A FLUIDE SOUS PRESSION

L'invention est relative aux systèmes de sustentation tels que paliers et glissières qui comprennent un
premier élément muni d'une surface d'appui, un deuxième
élément muni d'une surface conjuguée, c'est-à-dire une
surface dont la forme est conjuguée de celle de la surface
d'appui du premier élément, lequel deuxième élément est
mobile par rapport au premier élément et est sollicité par
des efforts tendant à maintenir sa surface conjuguée en
contact avec la surface d'appui du premier élément, et des
moyens propres à recevoir d'une source appropriée un fluide
sous pression et à l'introduire dans au moins une poche
principale ménagée dans la surface d'appui du premier élément, l'ensemble étant tel que le fluide ainsi introduit
maintienne les deux susdites surfaces écartées l'une de
l'autre contre l'action des susdits efforts en s'échappant
de la poche par le jeu ainsi établi entre ces deux surfaces.
Le mouvement relatif entre les premier et deuxième éléments peut être un mouvement de rotation, continu, alternatif ou intermittent, ou un mouvement de translation, ou un mouvement de rotation et de translation. En général, le fluide susvisé est constitué par de l'huile.

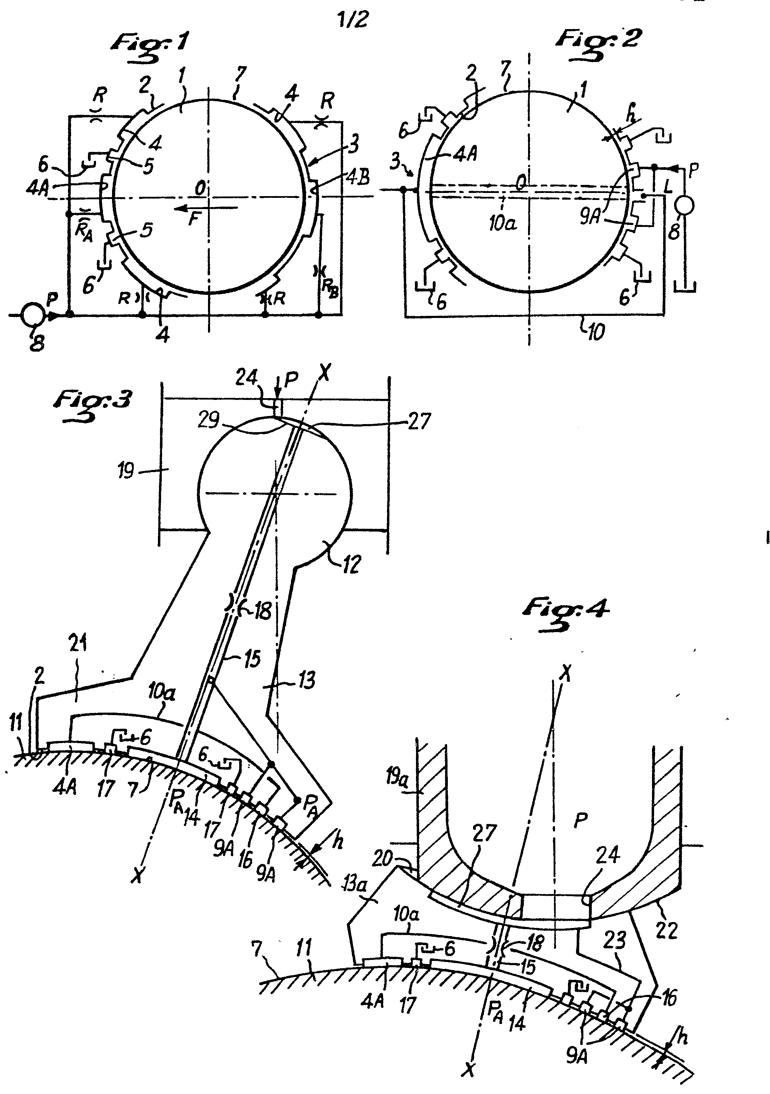

Ainsi qu'on le rappellera plus en détail ci-après à l'aide de la figure 1 des dessins, les susdits moyens d'introduction de fluide nécessitent généralement la présence de petits orifices qui compliquent l'usinage et nécessitent, pour éviter leur colmatage, un système de filtration de fluide dont la complication et le prix de revient sont inacceptables dans un grand nombre d'applications.

Ainsi qu'on le rappellera en outre ci-après à l'aide de la figure 2 des dessins, lorsque les éléments sont limités par des surfaces conjuguées "réciproques", c'est-à-dire lorsque l'un des éléments entoure l'autre de façon telle que la diminution du jeu qui se produit d'un côté entre ces deux éléments se traduise automatiquement par une augmentation du jeu sur le côté opposé, on sait remplacer les susdits petits orifices par des passages réduits utilisant le jeu en question (voir par exemple le FR-A-2.118.563).

Au contraire, lorsque les éléments sont limités par des surfaces conjuguées qui ne sont pas "réciproques" et qui sont par exemple planes ou courbes à contour non fermé selon la direction du mouvement relatif, cette dernière solution est inopérante en raison d'un risque d'écartement mutuel excessif des deux éléments.

L'invention, qui est relative aux systèmes de sustentation dont les deux éléments définis ci-dessus sont à surfaces conjuguées non "réciproques", a pour but de créer un système de sustentation du premier élément par rapport au deuxième, qui évite en fonctionnement tout contact entre les éléments et qui par conséquent facilite la fabrication, diminue l'usure, et admette des systèmes de filtration plus grossiers et moins coûteux.

Pour atteindre ce but, le système de sustentation a ses moyens propres à introduire le fluide sous pression dans la susdite poche principale qui comprennent au moins une poche auxiliaire ménagée comme la poche principale dans la surface d'appui du premier élément mais située à l'opposé de cette poche principale par rapport à l'axe de la résultante des efforts développés lors du mouvement relatif des deux éléments, laquelle poche auxiliaire est reliée en amont à la source de fluide sous pression et en aval, par l'intermédiaire du jeu entre le bord de cette poche auxiliaire et la surface conjuguée du deuxième élément, à la poche principale, la surface de la poche auxiliaire étant nettement plus petite que celle de la poche principale. Selon l'invention, les susdites surfaces étant non réciproques selon la définition donnée ci-dessus, la source de liquide sous pression est reliée à la poche auxiliaire et, par l'intermédiaire d'une restriction propre à réduire la pression du fluide, à une poche centrale de sustentation ménagée dans la surface d'appui du premier élément et approximativement symétrique par rapport au susdit axe. De préférence, la surface de la ou des poches auxiliaires est égale à 0,3 fois environ celle de la poche principale.

De préférence, le premier élément est soumis directement à l'action de la pression de la source qui exerce ainsi sur lui les susdits efforts.

Conformément à une caractéristique de l'invention, la poche auxiliaire est reliée à la poche principale par l'intermédiaire d'une cavité située en aval dudit jeu et formant l'ouverture d'un conduit aboutissant à la poche principale.

Dans le palier conforme à l'invention, lorsque le deuxième élément se rapproche du premier élément du côté de la poche principale, le jeu augmente à la sortie de la poche auxiliaire, la perte de charge dans ce jeu diminue et la pression de l'huile envoyée à la poche principale augmente. La force de pression hydraulique qui tend

4

à éloigner le deuxième élément du premier augmente du côté de cette poche principale et il se produit ainsi un recentrage du deuxième élément par rapport au premier.

Dans le cas d'un patin, l'axe de la résultante des efforts, qui passe généralement au centre de la surface plane ou courbe à contour non fermé selon la direction du mouvement relatif, définit des régions que l'on considère comme opposées dans la mesure où le patin a tendance à basculer tantôt en avant et tantôt en arrière, et également de gauche à droite et de droite à gauche, en faisant varier en sens inverses le jeu dans la région des poches principales et des poches auxiliaires conjuguées.

L'invention sera décrite plus en détail ci-après à l'aide des dessins schématiques annexés.

La figure 1 représente, en coupe, un palier hydrostatique d'un premier type connu.

La figure 2 représente, en coupe, un palier d'un deuxième type connu ainsi qu'une variante en trait mixte.

La figure 3 représente une bielle à rotule terminée par un patin et établie selon un premier mode de réalisation de l'invention.

La figure 4 représente une bielle à rotule établie selon une variante de la figure.3.

Les figures 5 et 6 représentent une autre variante de la figure 3, respectivement par des vues en coupe et en plan.

La figure 7 représente une variante de la figure 4.

Comme le montre la figure 1, on sait actuellement maintenir un arbre cylindrique 1 (deuxième élément) suspendu sans contact dans l'alésage ou surface d'appui 2 d'un coussinet 3 (premier élément) à l'aide de poches 4 ménagées dans le coussinet 3 et alimentées en huile sous pression P par une source 8 telle qu'une pompe. Ces poches 4 peuvent être (comme montré à la gauche de la fig. 1) ou non (comme montré à la droite de la figure 1) séparées l'une de l'autre par des rainures 5 de retour de l'huile au réservoir 6. Toutes les poches 4 sont alimentées par la source d'huile 8 par l'intermédiaire de petits orifices R. Selon le vocabulaire adopté dans ce qui précède, la surface cylindrique 7 de l'arbre 1 constitue la surface dite "conjuguée".

Lorsque l'arbre 1 se déplace vers la droite de la figure 1, les fuites de la poche 4B (située à droite de l'arbre 1) le long de l'arbre 1 diminuent et celles de la poche 4A (située à gauche de l'arbre 1) augmentent. La perte de charge au travers de l'orifice $R_B$ associé à la poche 4B diminue et la pression $P_b$ dans la poche 4B augmente. Inversement, la perte de charge au travers de l'orifice $R_A$ associé à la poche 4A augmente et la pression $P_a$ dans la poche 4A diminue. La force $F = S (P_b - P_a)$ ainsi exercée de droite à gauche sur l'arbre 1 (où S est la valeur de la surface de l'arbre 1 en regard de chacune des poches 4A et 4B) opère la correction en ramenant l'arbre 1 vers la gauche de la figure 1.

Le système est efficace, que l'arbre 1 se déplace en rotation ou en translation.

Lorsque la place disponible est mesurée et les pressions élevées comme dans les grandes machines ou les moteurs hydrauliques, le système est limité par la petitesse des orifices R. En effet, il est généralement admis que, si le diamètre de ces orifices doit être inférieur à 0,4 mm, ceci implique une filtration exceptionnelle qui est incompatible avec les applications courantes.

Selon le palier conforme au deuxième mode de réalisation connu qui est représenté schématiquement à la figure 2, on retrouve une poche 4A ménagée dans la surface d'appui 2 et analogue à celle qui est désignée par la même référence à la figure 1. Toutefois, la source d'huile 8 n'est pas reliée à la poche 4A par l'intermédiaire d'un petit orifice (R à la figure 1), mais à une poche auxiliaire 9A constituée ici par une gorge annulaire et ménagée elle aussi dans la surface d'appui 2. Cette poche auxiliaire 9A est située à l'opposé de la poche principale 4A par rapport à la direction générale des efforts développés lors du mouvement de l'arbre 1. Plus précisément, la poche auxiliaire 9A est à peu près diamétralement opposée à la poche principale 4A. En outre, la poche auxiliaire 9A est reliée à la poche principale 4A par l'intermédiaire d'abord du jeu h entre le bord de cette poche auxiliaire 9A et la surface conjuguée 7 de l'arbre 1, puis d'une cavité formant l'ouverture d'un canal 10 et disposée en un point sieté à proximité de la poche auxiliaire 9A et de préférence, lorsque celle-ci est constituée par une gorge annulaire, un point situé au centre de cette gorge mais ne communiquant pas directement avec celle-ci. Enfin, la surface de la poche auxiliaire 9A est nettement plus petite que celle de la poche principale 4A. Bien entendu, il est associé à la poche principale 4A une poche principale 4B (non montrée) située du côté opposé (comme dans le mode de réalisation de la figure 1) et à la poche auxiliaire 9A une poche auxiliaire 9B (non montrée) située du côté opposé et reliée à la poche principale 4B de la même façon que la poche auxiliaire 9A est reliée à la poche principale 4A.

Les poches 4A, 9A ou 4B, 9B qui sont situées du même côté de l'arbre 1 sont décalées dans la direction axiale de cet arbre 1 de façon à ne pas pouvoir communiquer ensemble mais, pour simplifier la figure 2, on n'y a représenté que les poches 4A et 9A comme si elles étaient diamétralement opposées. D'autres ensembles de poches principale et auxiliaire peuvent être prévus à 120° ou 90°, par exemple, par rapport à l'axe 0 de l'arbre 1.

Le régime de fuite de l'huile, de la poche auxiliaire 9A au canal 10, le long de l'arbre 1, dépend de la valeur du jeu h. Lorsque l'arbre 1 se déplace vers la droite de la figure 2, le jeu h diminue au niveau de la poche auxiliaire 9A, la perte de charge augmente et la pression régnant dans le canal 10, qui est aussi celle de la poche principale 4A, diminue. On obtient ainsi une correction analogue à celle qui a été exposée en regard de la figure 1.

L'arbre 1 peut tourner et/ou coulisser dans le coussinet 3. Quand cet arbre 1 est agencé pour comporter les poches et est contenu dans un alésage lisse, que le mouvement soit en translation ou en rotation, le canal 10, au lieu de passer autour de l'arbre 1 comme représenté en trait plein à la figure 2, pourrait traverser radialement l'arbre 1 comme représenté en trait mixte en 10a.

De toute façon, la plage qui sépare la poche auxiliaire telle que 9A et le départ du canal 10 ou 10a est constamment balayée en fonctionnement par un flux d'huile et n'est donc pas sensible à un colmatage par des impuretés entraînées par l'huile.

Ceci étant rappelé, l'invention a pour but de maintenir des patins parallèles à leur surface de glissement.

C'est le cas par exemple de la bielle 13 à rotule 12 et à excentrique 11 qui est représentée à la figure 3 et qui fait partie d'un moteur à fluide sous pression, tel qu'un moteur hydraulique. Selon la terminologie adoptée ci-dessus, le premier élément est la bielle 13 et le deuxième élément est l'excentrique 11. Dans ce cas, on ne dispose pas de surfaces diamétralement opposées et l'application de la solution connue rappelée à l'aide de la figure 2 n'est pas évidente pour un homme de métier. La rotule 12 de la bielle 13 est engagée dans un siège sphérique prévu à cet effet dans un piston 19 qui reçoit la poussée d'un fluide qui est ici le fluide d'alimentation à la pression P. L'axe X - X de la résultante des efforts exercés sur le piston 19 par cette pression P passe au voisinage du centre de la surface d'appui curviligne 2 du premier élément qui est ménagée dans un patin 21 solidaire de la bielle 13.

Sur cette surface d'appui 2, on trouve ici, de part et d'autre d'une poche centrale de sustentation 14 symétrique par rapport à l'axe X - X, une poche auxiliaire 9A et une poche principale 4A analogues à celles de la figure 2. Un canal central 15, traversant longitudinalement la bielle 13, reçoit de l'huile à la pression P d'alimentation du moteur et la transmet en parallèle à la poche centrale 14 et à la poche auxiliaire 9A. Un canal 10a, ménagé dans le patin 21 de la bielle 13, relie à la poche principale 4A un trou ou cavité 16 situé au voisinage de la poche auxiliaire 9A. Une gorge 17, reliée au réservoir 6, peut entourer la poche centrale 14 de façon à éviter toute interférence entre les diverses pressions. Le jeu fonctionnel h est défini par l'action de la pression $P_A$ dans la poche centrale 14 qui tend à décoller de l'excentrique 11 le patin 21 de la bielle 13 contre l'action de la pression P qui s'exerce sur le piston 19. L'épaisseur de ce jeu h est réglée par une restriction ou orifice calibré 18 qui est prévu sur le canal 15, en amont de la poche centrale 14 et des poches auxiliaires telles que 9A, et qui provoque une perte de charge entre la pression d'alimentation P et la pression $P_A$. Si le jeu h croît, le débit de fuite et la perte de charge par la fuite augmentent, la pression $P_A$ diminue et la patin 21 de la bielle 13 tend à se rapprocher de l'excentrique 11, sous l'effet de la pression P qui s'exerce sur le piston 19.

Pour que le patin 21 reste à peu près parallèle à l'excentrique 11 sans le toucher, il faut qu'il soit capable de développer un couple de redressement supérieur aux couples d'inclinaison et de frottement, dus à la rotule 12, qui tendent à le faire basculer. La poche principale 4A située à la gauche de la figure 3, alimentée par la poche auxiliaire 9A située à la droite de la figure 3, et une poche principale 4B (non montrée) située à la droite de la figure 3, alimentée par une poche auxiliaire 9B (non montrée) située à la gauche de la figure 3, assurent cette fonction, de la manière expliquée à propos de la figure 2, à ceci près que l'évolution "réciproque" des jeux, dans le cas de la figure 2, est remplacée par une évolution des jeux à effet de bascule du patin autour du centre de poussée de sa poche centrale 14.

La variante de la figure 4 diffère du mode de réalisation de la figure 3 par le fait que le piston 19 est remplacé par un plongeur 19a sur lequel s'exerce la pression P de la source 8 et la bielle 13 par un patin séparé 13a agencé comme le patin 21 de la bielle 13 de la figure 3 et muni de l'orifice calibré 18. Dans ce cas, le patin 13a comporte un siège conique ou partiellement sphérique 20 qui reçoit l'extrémité 22, de forme partiellement sphérique, du plongeur 19a. A la différence du mode de réalisation de la figure 3, l'orifice calibré 18 est situé en amont de la seule poche de sustentation 14, les poches auxiliaires telles que 9A recevant l'huile à la pression P par un canal 23. Le fonctionnement de la variante de la figure 4 est identique à celui du mode de réalisation de la figure 3 et ne nécessite donc pas de nouvelles explications.

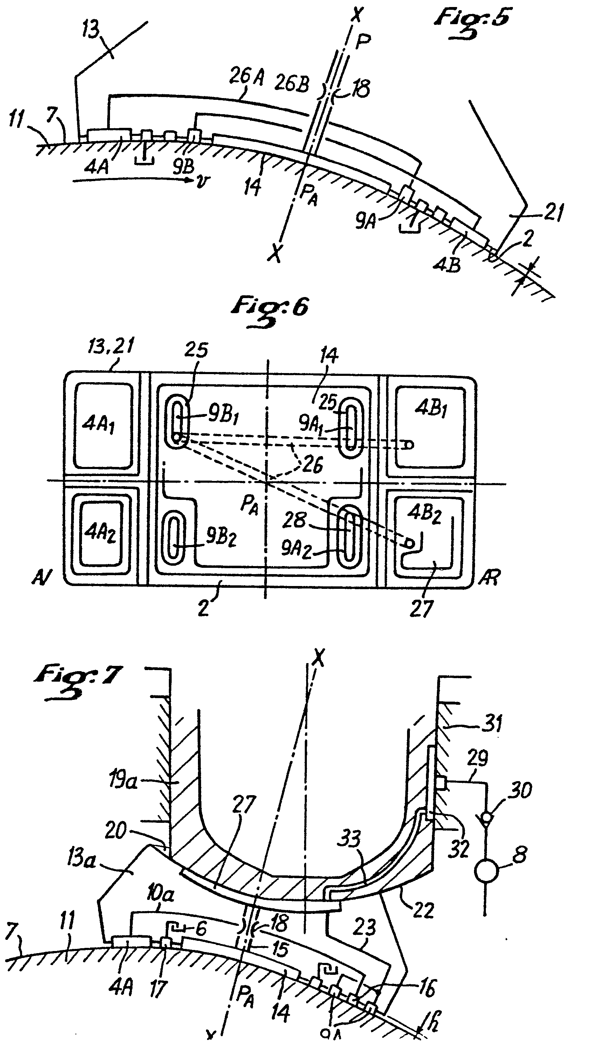

Selon la variante illustrée aux figures 5 et 6, qui est de conception simplifiée, le canal 15 n'alimente directement que la poche centrale de sustentation 14 et les poches auxiliaires $9A_1$, $9A_2$, $9B_1$, $9B_2$, sont placées près de ou, de préférence, à l'intérieur de la poche centrale 14 où règne la pression $P_A$ en y étant entourées et délimitées par des bordures en relief 25, de façon à pouvoir être alimentées par des fuites d'huile provenant de la poche centrale 14 à travers ces bordures 25. Les poches auxiliaires $9A_1$, $9A_2$, $9B_1$, $9B_2$, au nombre de quatre, sont disposées aux quatre coins de la poche centrale 14 qui est de forme approximativement rectangulaire et sont reliées respectivement à quatre poches principales $4A_1$, $4A_2$, $4B_1$, $4B_2$ disposées à l'extérieur de la poche centrale 14, aux quatre coins du patin 21 de la bielle 13 (figure 3) ou du patin séparé 13a (figure 4), en dehors de la poche centrale 14. Les poches auxiliaires sont reliées aux poches principales par des canaux 26, soit face à face, soit en diagonale (comme montré à la figure 6) selon les applications. Les différentes poches peuvent avoir une forme annulaire à partie centrale pleine, comme montré (en 27 pour les poches principales 4 et en 28 pour les poches auxiliaires 9) dans la partie inférieure de la figure 6, pour augmenter la surface occasionnelle d'appui pendant la construction  ou lors de surcharges brutales.

Dans le mode de réalisation de la figure 3, le fluide sous pression provenant de la source 8 arrive sur le dessus du piston 19 et exerce sur celui-ci les efforts qui tendent à maintenir la surface 2 du patin 21 contre la surface 7 de l'excentrique 11. Le piston 19 comporte un canal central 24 qui relie sa partie supérieure au logement sphérique de la rotule 12 et celle-ci comporte un méplat 29 qui délimite une chambre 27 qui est toujours en communication avec le canal central 15. Dans le mode de réalisation de la figure 4, le plongeur 19a est creux et possède un canal central 24 qui relie la cavité de ce plongeur 19a à une chambre 27, laquelle est ménagée à la partie supérieure du patin 13a de façon à être obturée par le plongeur 19a et est reliée en permanence au canal central 15. Dans le cas de la figure 3  comme dans celui de la figure 4, c'est le fluide provenant de la source 8 qui exerce sur le piston 19 ou le patin 13a les efforts qui tendent à maintenir la surface du patin 21 ou 13a contre la surface 7.

Dans le cas d'un moteur pneumatique, à vapeur ou à combustion, la poussée sur le piston ou plongeur est exercée par le fluide moteur, mais la source 8 d'huile sous pression peut être reliée à la chambre 27, le piston 13 ou le plongeur 19a étant alors étanche. C'est ainsi que la figure 7 représente une variante qui se distingue de la figure 4 par la suppression du canal central 24 et par la mise en communication de la source de fluide sous pression 8 avec la chambre 27 à l'aide d'une canalisation 29 munie d'un clapet anti-retour 30 et débouchant à l'intérieur du cylindre 31, au niveau d'une rainure 32 ménagée dans le plongeur 19a. Cette rainure 32 communique avec la chambre 27 par l'intermédiaire d'un passage 33 ménagé dans la masse du plongeur 19a. Bien qu'il y ait ici deux sources de fluide sous pression, le fonctionnement de la variante de la figure 7 est le même que celui du mode de réalisation de la figure 4.

Un homme de métier n'aurait aucune difficulté pour transposer la variante de la figure 7 au cas du piston 19 de la figure 3.

Dans tous ces systèmes, la pression $P_A$ est maintenue voisine de la pression d'alimentation P en étant par exemple comprise entre 80% et 95% de P, pour que l'orifice calibré 18 soit assez grand (diamètre de l'ordre de 0,8 à 2 mm) et de toute façon nettement plus grand que les orifices R (figure 1) des paliers hydrostatiques connus.

La pression régnant dans les poches auxiliaires telles que $9A_1$ (figure 6), lorsque le patin 21 ou 13a est parallèle à la surface conjuguée 7, est avantageusement de l'ordre de 0,2 à 0,6 $P_A$ pour que l'effet de correction soit important.

La disposition des poches auxiliaires à l'opposé des poches principales qu'elles alimentent amplifie la sensibilité du système. Cette sensibilité serait moins bonne si les poches principales étaient alimentées par des orifices fixes qui seraient de plus trop petits.

12

REVENDICATIONS

1. Système de sustentation comprenant un premier élément (13 - 21, 13a) muni d'une surface d'appui (2), un deuxième élément (11) muni d'une surface conjuguée (7), lequel deuxième élément (11) est mobile par rapport au premier élément et est sollicité par des efforts tendant à maintenir sa surface conjuguée en contact avec la surface d'appui du premier élément, et des moyens propres à recevoir d'une source (8) un fluide sous pression et à l'introduire dans au moins une poche principale (4) ménagée dans la surface d'appui du premier élément, l'ensemble étant tel que le fluide ainsi introduit maintienne les deux susdites surfaces (2, 7) écartées l'une de l'autre contre l'action des susdits efforts en s'échappant de la poche principale par le jeu ainsi établi entre ces deux surfaces, les moyens propres à introduire le fluide sous pression dans la susdite poche principale (4) comprenant au moins une poche auxiliaire (9) ménagée comme la poche principale (4) dans la surface d'appui (2) du premier élément (3) mais située à l'opposé de cette poche principale (4) par rapport à l'axe (X - X) de la résultante des efforts développés lors du mouvement relatif des deux éléments, ladite poche auxiliaire (9) étant reliée en amont à la source de fluide sous pression (8) et en aval, par l'intermédiaire du jeu (h) entre le bord de cette poche auxiliaire (9) et la surface conjuguée (7) du deuxième élément (1), à la poche principale (4), la surface de la poche auxiliaire (9) étant nettement plus petite que celle de la poche principale, caractérisé en ce que, les susdites surfaces (2, 7) étant non réciproques, la source de liquide sous pression (8) est reliée à la poche auxiliaire (9) et, par l'intermédiaire d'une restriction (18) propre à réduire la pression du fluide, à une poche centrale de sustentation (14) ménagée dans la surface d'appui (2) du premier élément (13) et approximativement symétrique par rapport à l'axe (X - X).

2. Système de sustentation selon la revendication 1, caractérisé en ce que le premier élément (13) est soumis directement à l'action de la pression (P) de la source (8) qui exerce ainsi sur lui les susdits efforts.

3. Système de sustentation selon l'une quelconque des revendications 1 à 2, caractérisé en ce que la surface d'appui (2) comporte, en aval dudit jeu et à faible distance de la poche auxiliaire (9), une cavité (16) formant l'ouverture d'un conduit ou canalisation (10, 10a) qui aboutit à ladite poche principale (4).

4. Système de sustentation selon l'une quelconque des revendications 1 à 3, caractérisé en ce que la restriction (18) est située en amont de la seule poche centrale de sustentation (14), la poche auxiliaire (9) étant reliée à la source de fluide (8) par un canal (23) court-circuitant cette restriction (18).

5. Système de sustentation selon l'une quelconque des revendications 1 à 3, caractérisé en ce que la restriction (18) est située en amont tant de la poche centrale de sustentation (14) que de la poche auxiliaire (9).

6. Système de sustentation selon la revendication 5, caractérisé en ce que la poche auxiliaire (9) est située près de ou à l'intérieur de la poche centrale de sustentation (14) de façon à être alimentée par des fuites de fluide provenant de cette poche centrale (14).

7. Système de sustentation selon la revendication 6, caractérisé en ce que la poche auxiliaire (9) est délimitée par une bordure (25) à l'intérieur de la poche centrale (14).

8. Système de sustentation selon la revendication 7, caractérisé en ce que quatre poches auxiliaires ($9A_1$, $9A_2$, $9B_1$, $9B_2$) sont disposées aux quatre coins de la poche centrale (14), de forme approximativement rectangulaire, et sont reliées respectivement à quatre poches principales ($4A_1$, $4A_2$, $4B_1$, $4B_2$) disposées, à l'extérieur de la poche

0170572

centrale (14), aux quatre coins du premier élément (21)
en forme de patin.

9. Système de sustentation selon la revendication
8, caractérisé en ce que les poches auxiliaires ($9A_1$, $9A_2$, $9B_1$, $9B_2$) sont reliées en diagonale par des canaux (26)
aux poches principales ($4A_1$, $4A_2$, $4B_1$, $4B_2$).

10. Système de sustentation selon l'une quelconque
des revendications 1 à 9, caractérisé en ce que les poches
auxiliaires (9) et/ou les poches principales (4) ont une
forme annulaire à partie centrale pleine (27, 28).

0170572

1/2

Fig.1

Fig.2

Fig.3

Fig.4

Fig:5

Fig:6

Fig:7

### Office européen
### des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | EP-A-0 105 050 (S. EISENMANN et al.) <br> * Pages 17-20; figures * <br> --- | 1,3,6 | F 16 C 32/06 |
| A | FR-A-2 118 563 (LIDKÖPINGS) <br> * Pages 7-9; figures * <br> --- | 1,7,9 | |
| A | FR-E- 56 050 (P.L.J. GERARD) <br> * En entier * <br> --- | 1,3 | |
| A | FR-A-1 013 566 (GENDRON SA et al.) <br> --- | | |
| A | DE-A-2 158 690 (U. ALDINGER) | | |
| | ----- | | DOMAINES TECHNIQUES RECHERCHES (Int. Cl.4) <br><br> F 16 C |

Le présent rapport de recherche a été établi pour toutes les revendications

| Lieu de la recherche | Date d'achèvement de la recherche | Examinateur |
|---|---|---|
| LA HAYE | 04-10-1985 | BEGUIN C.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82